# EUROPEAN PATENT SPECIFICATION

(11) **EP 2 451 376 B1**
(45) Date of publication and mention of the grant of the patent: **04.04.2018**
(21) Application number: 10797877.7
(22) Date of filing: 08.07.2010
(51) Int. Cl.: G05D 21/02

(54) **METHODS AND SYSTEMS FOR ADJUSTING THE pH OF MEDICAL BUFFERING SOLUTIONS**
VERFAHREN UND SYSTEME ZUR EINSTELLUNG DES PH-WERTS VON MEDIZINISCHEN PUFFERLÖSUNGEN
PROCÉDÉS ET SYSTÈMES D'AJUSTEMENT DU PH DE SOLUTIONS TAMPONS MÉDICALES

(30) Priority: 09.07.2009 US 270571 P; 15.07.2009 US 270999 P; 27.08.2009 US 275352 P; 08.09.2009 US 276137 P; 23.04.2010 US 766259
(43) Date of publication of application: 16.05.2012
(73) Proprietor: Onpharma, Inc., Bridgewater, NJ 08807 (US)
(72) Inventor: STEPOVICH, Matthew, J., Santa Cruz, California 95062 (US); FALKEL, Michael, I., Carmel Highlands, California 93923 (US); NGUYEN, Harry, Westminster, California 92683 (US)
(74) Representative: Eisenführ Speiser
(86) International application number: PCT/US2010/041431
(87) International publication number: WO 2011/006010

(56) References cited:
- JP-A- 2002 308 782
- US-A- 5 211 643
- US-A- 5 211 643
- US-A- 5 226 901
- US-A- 5 779 357
- US-A1- 2003 015 423
- US-A1- 2003 232 093
- US-A1- 2004 175 437
- US-A1- 2005 089 993
- US-A1- 2007 293 441
- US-A1- 2008 045 925
- US-A1- 2009 292 271

## Description

### BACKGROUND OF THE INVENTION

1. Field of the Invention. The present invention relates generally to methods and systems for pH adjustment and control. More specifically, the present invention relates to methods and systems for adjusting the pH of buffers and other medical solutions to achieve uniformity among pluralities of individual containers.

A buffer is a substance that minimizes the change in pH of a solution when an acid or base is added to the solution. Medical buffer solutions frequently contain bicarbonate ions and are used in numerous medical applications including antidotes, dialysates, body replacement fluids, body irrigating solutions, cardiac perfusates, and for many other purposes. One of the most commonly used medical bicarbonate buffer solutions consists of sodium bicarbonate (NaHCO₃) mixed with water, which among other things, can be used to buffer parenteral injections to a more physiologic pH prior to injection. Of particular interest to the present application, bicarbonate solutions may be used to buffer acidic local anesthetic injections in order to enhance anesthetic effectiveness, reduce injection pain, and limit tissue trauma. For use of sodium bicarbonate for buffering local anesthetic, as well as for other medical uses including but not limited to treatment of acidosis, it is desirable that sodium bicarbonate solutions be precisely maintained at or near a particular known pH. Using a buffer solution having a known pH allows a medical practitioner to mix a predetermined ratio of the buffer solution with the parenteral solution in order to achieve precise control over the resulting pH of parenteral solution, which has significant benefits over using a parenteral solution where the pH is not precisely known.

As an example, when compounding 8.4% sodium bicarbonate buffer solution with commercially available cartridges of 2% lidocaine with epinephrine 1:100,000, the pH of the buffer solution will tend to drive the pH of the combination, almost exclusively of the pH of the commercially available anesthetic cartridges, such that a relatively small volume of buffer solution will have a disproportionately large impact on the pH of the combined solution. Thus, to achieve a parenteral solution with a predictable pH, it is important that the pH of the buffer solution be precisely known and controlled.

Commercially produced sodium bicarbonate buffers do not provide buffer packages with precisely controlled pH. For example, commercially available buffering solutions list a very large pH range on their labels, with sodium bicarbonate solutions typically labeled from pH 7.0 to pH 8.5. An assay of the commercially available sodium bicarbonate solutions performed by the inventors showed a pH range from 7.62 to 8.26 in a number of commercially obtained bicarbonate buffer cartridges. Presumably the actual range of the product available in the marketplace is even wider than the range shown in this assay.

It must be appreciated, in this context, that a medical buffer having an actual pH of 7.0 may perform significantly differently than a medical buffer having an actual pH of 8.5. This is true whether the medical buffer is designed to buffer the pH of the body's fluids, for instance in the treatment of acidosis, or the medical buffer is designed to buffer the pH of a parenteral solution prior to its use. In the example where a practitioner uses sodium bicarbonate solution to buffer anesthetic to achieve physiologic pH, the ratio of buffer solution to anesthetic solution will be quite different when the pH of the bicarbonate solution is 7.0 compared to when the pH is 8.5. Thus, prior art methods of combining buffering solution with parenteral solutions which rely on adding the same ratio of buffering solution to the parenteral solution (regardless of the actual pH of the buffer) will not consistently arrive at the desired pH for the buffered parenteral.

For these reasons, it would be desirable to provide packaged buffers with precisely controlled pH's so that the pH in each individual package is substantially identical and consistent. It would be further desirable to provide methods and systems for producing packaged buffer solutions which allow for the preparation of unlimited numbers of packages, such as cartridges, capsules, carpules, vials, and other containers, each of which contains a stable and precisely known pH. Such methods and systems should provide for the economical preparation of such buffer packages, allow for storage of such packages for prolonged periods while maintaining pH stability, and be compatible with sterilization protocols and systems. At least some of these objectives will be met by the inventions described below.

2. Description of the Background Art. Glass vials and cartridges for storing medical solutions are described in U.S. Patent Nos. 1,757,809; 2,484,657; 4,259,956; 5,062,832; 5,137,528; 5,149,320; 5,226,901; 5,330,426; and 6,022,337. Injection pens which employ drug cartridges are described in U.S. Patent No. 5,984,906. Exemplary disposable drug cartridge that could be loaded with buffer solution in accordance with the present invention are described in U.S. Patent No. 5,603,695 and in commonly owned, copending application US2009/0292271 (USSN12/406,670), both of which are incorporated herein by reference. A device for delivering a buffering agent into an anesthetic cartridge using a transfer needle is described in U.S. Patent No. 5,603,695. Devices for maintaining a dissolved gas in solution in a pouch are described in U.S. Patent Nos. 5,690,215; 5,610,170; and 4,513,015, and U.S. Patent Publ. No. 2007/0265593. Other patents and applications of interest include U.S. Patent Nos. 2,604,095; 3,993,791; 4,154,820; 4,630,727; 4,654,204; 4,756,838; 4,959,175; 5,296,242; 5,383,324; 5,603,695; 5,609,838; 5,779,357; and U.S. Patent Publ. No. 2004/0175437. Literature publications describing buffering anesthetics with widely different ratios of a sodium bicarbonate solutions include Ridenauer et al., Anesth Prog, vol. 48, p. 9-15 (2000); Palmon et al., Anesth Analg, vol. 86, pp. 379-81 (1998); Metzinger et al., Southern Med J, vol. 87, no. 2 (1994); Nelson, Contracept, vol. 55, p. 299 (1995); Samdal, Scand J Plast and Recons Surg and Hand Surg, vol. 28, p. 33-37 (1993); Master, Br. J Plast Surg, vol. 51, p. 385 (1998); Difazio et al. Anesth Analg, vol. 65, p. 760 (1986); Fitton et al., Br. J Plast Surg, vol. 49, pp. 404-08 (1996); Peterfreund et al., Region Anesth, vol. 14, no. 6, p. 265 (1989); Momsen et al., Ugeskr Laeger, vol. 162, no. 33, p. 4391 (2000); Schwab et al. Am J Emerg Med, vol. no. 3 (1996); McGlone et al. Arch Emerg Med, vol. 7, pp. 65-68 (1990); and Sapin P, et al. Catheterization and Cardio Diag, vol. 23, pp. 100-102 (1991).

### BRIEF SUMMARY OF THE INVENTION

The present invention provides methods and uses of systems for preparing container inventories of bicarbonate medical buffer solutions (buffers) having a precisely controlled pH with minimum variability among the solutions in any individual container. By providing such inventories of buffer containers where the buffer in each container has an identical pH (within a very small tolerance, typically ± -0.03), the buffers can be used to control the pH of other medical solutions, such as local anesthetics, to a predictable physiologic pH by combining a predetermined volume of the buffer with the medical solution. In this way, the buffered pH of the combined buffer and medical solution will also be precisely controlled and predictable, a result that would not be possible if the pH of the buffer solution were not itself precisely controlled and predictable.

Medical bicarbonate buffer solutions are acidic buffers that rely on the combination of carbon dioxide (CO₂) with water to form carbonic acid (H₂CO₃) which dissociates to a hydrogen ion (H⁺) and a bicarbonate ion (HCO₃⁻).

In buffering medical solutions, including local anesthetics such as lidocaine, articaine, prilocaine, and mepivacaine, both the amount of the buffering solution and the pH of the buffering solution can have a significant effect on the "buffered" pH of the combined solutions. Viewed differently, the amount of buffering solution needed to stabilize a medical solution at a particular target pH will depend on the pH of the buffering solution itself. Thus, a measured volume of buffering solution cannot be relied on to adjust the pH of a medical solution toward a target pH when the actual pH of the buffering solution vary significantly from its nominal pH, and the stabilized pH of the buffered medical solution can differ significantly from the target value. Conversely, by providing inventories of medical buffer solutions having precisely controlled and highly predictable pH values in accordance with the present invention, the user can adjust the pH of a local anesthetic or other medical solution in a highly predictable manner by combining a predetermined or calculated volume of the buffer with a given volume of the medical solution.

In a first aspect of the present invention, a method for adjusting pH of a bicarbonate buffer in a plurality of buffer containers comprises positioning each of the containers in a chamber with the containers open to expose the buffer inside each container to a carbon dioxide containing atmosphere in the chamber. The pressure, temperature, carbon dioxide (CO₂) level, and usually relative humidity within the chamber are controlled to levels selected to provide a target equilibrium pH of the buffer. Maintaining a high relative humidity level will limit evaporation from the containers. By "equilibrium," it is meant that an equilibrium exists between the partial pressure of the dissolved CO₂ in the buffer solution within the container and the gaseous CO₂ in the chamber's atmosphere. As described above, the pH of the bicarbonate buffer solution depends on the four-way equilibrium between CO₂, carbonic acid, hydrogen ions, and bicarbonate ions. By providing a virtually unlimited source of CO₂ within the chamber at controlled pressure and temperature, the amounts of carbonic acid and bicarbonate ion within the buffer solution in each container will be driven to equilibrium values which are precisely equal within ± 0.05, preferably within ±0.03, and more preferably within ± 0.02. To achieve such precision, the concentration of CO₂ and temperature in the atmosphere within the chamber must be carefully controlled. The atmosphere will preferably be mixed to assure that it is substantially constant in all regions within the chamber. Such mixing can be achieved by introducing and/or recirculating fresh carbon dioxide gas through the chamber and by further mechanically mixing the gas within the chamber, as will be described in more detail below. Optionally, the containers may be vibrated, shaken or otherwise displaced during equilibration to mix the solution within the containers and to prevent pH gradients from forming in the containers.

The containers are held in the controlled atmosphere of the chamber for a time sufficient for the buffer in each of the containers to equilibrate with the carbon dioxide atmosphere to reach the target pH. Typically, the carbon dioxide atmosphere will be at least 99% by volume; preferably 99.9% by volume, most preferably being essentially pure carbon dioxide (100% by volume). These CO₂ values are based on a "dry" analysis with water vapor removed. In use, however, the atmosphere will typically have a high relative humidity as discussed below. The time necessary to equilibrate and reach the target equilibrium value with all containers will usually be about 36 hours, more usually about 40 hours, and often being 42 hours or more. When using 100% carbon dioxide at a temperature of about 72.5°F (22.5°C), at atmospheric pressure, a pH of 7.68 ±0.05 can be achieved. After sealing, the steam sterilization process (autoclaving of the containers) can have a further effect on the pH, for example, leading to a small increase of approximately 0.03, but such change is predictable and can be calculated in determining the final pH of the buffer in the sealed container.

The atmosphere in the chamber will usually be humidified to provide a humidity as close to 100% as possible, typically being at least 80%, preferably at least 90%, and usually 95% relative humidity or higher. As described in more detail below, the atmosphere can be humidified by passing the CO₂-containing gas through water columns prior to introducing the gas into the chamber. The temperature in the chamber will typically be maintained in the range from 72°F to 74°F, preferably from 72°F to 73°F. Open containers of water may be placed in the chamber during the period of time when the chamber is being filled with CO₂ in order to more efficiently achieve high humidity. Alternatively, the container may include an amount of liquid water that is expected to evaporate during the equilibration process.

In the exemplary embodiments, the carbon dioxide-containing gas is introduced to and exhausted from the chamber at a substantially constant flow rate. The actual flow rate will depend on the volume of the chamber, where the constant flow rate per hour will typically be in the range from about 25% of the volume to about 150% of the volume of the chamber, typically being about 40% to 75% of the chamber volume. Usually, the carbon dioxide-carrying gas will be circulated through the chamber prior to placing the buffer containers within the chamber so that the chamber is "primed" before receiving the containers. The carbon dioxide-containing gas will usually be introduced into the bottom of the chamber and exhausted from the top of the chamber. Because the humidified carbon dioxide gas is about twice as heavy as the air initially present in the chamber, the carbon dioxide will blanket the bottom of the chamber and drive the air upwardly and out of the exhaust port at the top of the chamber, eventually establishing a highly uniform gas composition within the chamber prior to beginning the treatment of the individual containers.

After the buffer solutions in the containers have equilibrated with the carbon dioxide atmosphere in the chamber, the containers may be sealed to inhibit changes in the pH during transfer and storage prior to use. The containers are preferably sealed with no head space so that there is no gas in the container which might allow CO₂ to evolve out of solution and enter the head space causing the pH of the solution in the container to change. Further preferably, a pressure is maintained on the buffer solution within the container to prevent the evolution of CO₂ out of solution, which could similarly cause the pH to change. Apparatus and methods for storing the buffers while applying pressure are described in commonly-owned application US 2009/029271, the full disclosure of which has previously been incorporated herein by reference.

In a further preferred aspect of the present invention, the containers may have a reduced diameter neck, where the neck provides the opening through which the gas equilibrates with the buffer solution. In such instances, the reduced area of the neck will limit the surface area of the buffer available for the molecular exchange necessary for equilibration. In such cases, the level of the buffer can be lowered to a larger diameter region of the container which affords a larger area for the equilibration reactions to occur. The larger area, in turn, will reduce the time needed to achieve equilibrium. After equilibrium has been achieved, the level of the buffer within the container can be raised to eliminate the head space, usually by advancing a plug or other support member within the container to push the buffer solution upwardly to fill the neck. Other means for raising the surface of the solution can also be used, such as reducing the width of the container, introducing an inert volume (e.g., beads) into the interior of the chamber to displace fluid, or the like.

In this way, inventories of buffer containers where the buffer in each container has a nearly identical pH can be prepared. Usually the inventories will comprise containers which are substantially identical in shape and volume, and the containers will then be packaged into larger boxes or other storage and/or shipping enclosures. Usually, such inventories will include at least four containers, but sometimes hundreds, thousands, or even tens of thousands of containers.

The containers may be sealed while they remain within the controlled environment of the chamber. Usually, however, the open containers will be removed from the chamber and sealed outside of the chamber. While it is possible to maintain the controlled environment even outside of the chamber for sealing, it will usually not be necessary. Exposure of the open containers to a normal atmosphere (without high levels of carbon dioxide) will have little effect on the containers so long as the air-liquid interface is small in relation to the fluid volume of the container, and the exposure is of short duration, typically less than 10 minutes.

In a further aspect of the present invention, a use of a system for adjusting the pH of a plurality of buffer containers comprises a chamber having a perimeter wall and an interior. The system further comprises a supply (source) of CO₂, such as one or more tanks of compressed CO₂ connected to one or more regulators, to deliver a CO₂ gas flow into the interior of the chamber, where the gas flow comprises at least about 99% by volume carbon dioxide, usually being substantially pure carbon dioxide, except that water vapor may be present in an amount sufficient to raise the relative humidity enough to limit or prevent evaporation during the equilibration process, as discussed elsewhere herein. A plurality of spaced-apart supports within the interior of the chamber are adapted to removably receive the plurality of buffer containers or carriers that may hold a small number of containers, typically being shelves on a revolving carousel or other moving frame. A multiplicity of pneumostatic passages are formed through the perimeter wall and located to allow placement of the buffer containers onto and removal of the buffer containers from each of the supports through the passages. The pneumostatic passages allow physical entry and exit of the buffer containers, typically on carriers, through the wall while inhibiting the exchange of gases from within the chamber with the exterior environment. Exemplary pneumostatic passages include valve structures, curtain structures, and port holes with sealing doors. Because the CO₂ source will maintain a constant flow of CO₂ into the chamber and the pneumatic passages are located below the level of the exhaust port any air which enters goes to the top of the chamber and is driven out by the continued flow of CO₂ gas into the chamber, thus re-establishing and maintaining the elevated carbon dioxide levels within the chamber.

Usually, the chamber comprises a free-standing cabinet, but the chamber could comprise a room or other structure built within a larger structure. The gas flow will typically flow freely into the bottom of chamber and out the exhaust port at the top of the chamber, where exhaust port is large enough to prevent any buildup of pressure within the chamber. Optionally, the supply lines could be adapted to maintain the temperature of the gas being introduced to the chamber, but typically the temperature within the chamber will be allowed to reach the temperature of the room or other surrounding environment in which the chamber.
is being maintained. Thus, temperature control within the chamber will be affected by temperature control within the room or surrounding containing the chamber. Still another option would be to build one or more of the walls out of a double layer of material, with the space in between being heated or chilled to create the desired temperature. Usually, the system will further comprise a water bath or water column, most typically a series of water columns, through which the inlet carbon dioxide gas flow would pass before the gas enters the chamber. Optionally, the last water column can be maintained at a temperature slightly above the chamber temperature so that the relative humidity of the gas does not drop when entering the chamber. In the exemplary embodiments, the supports comprise a rotatable carousel having a plurality of stacked, circular shelves, where the shelves rotate adjacent to the multiplicity of pneumostatic passages so that different portions of the shelves will be accessible from each of the pneumostatic passages to facilitate loading and unloading of the supports with the buffer containers. Optionally, the carousel may vibrate, causing the solution in the containers to mix over time, inhibiting the formation of pH gradients that might limit uniform equilibration.

Moreover, an inventory of buffer containers is disclosed which comprises a plurality of containers filled with an aqueous solution of a bicarbonate buffer solution, wherein each container in the inventory has a volume of bicarbonate solution in the range from 2.5 ml to 3.1 ml and a pH variation below ±0.05 when compared to the pH of other containers in the inventory. The pH containers may comprise any conventional medical solution container, including bottles, syringes, tubes, and the like, but usually will comprise glass cartridges having a neck and a cap with a needle-penetrable septum. Such cartridges, sometimes referred to as carpules, will preferably further include a bottom support which can be advanced within the cartridge in order to dispense the aqueous buffer through the neck under positive pressure. Such containers are illustrated, for example, in commonly-owned application US2009/0292271, the full disclosure of which has previously been incorporated herein by reference. In preferred aspects, the bicarbonate solution in each container will be maintained at a pressure above atmospheric to inhibit the evolution of carbon dioxide during storage. The containers will usually be maintained in storage receptacles, such as boxes, trays, or the like, for storage, shipping, and the like.

The fluid in the containers may be held under pressure by a spring or other structure that provides enough force to prevent CO₂ from evolving out of solution during transportation or storage. If the cartridge is steam sterilized, as an alternative to aseptic filling, then the force applied by the spring must be sufficient to prevent the sodium bicarbonate from boiling during the autoclave process. However the spring force must not be so great that the fluid cannot undergo thermal expansion, in which case the container may fail. Finally, the spring force must not allow the pressure in the vessel to rise sufficiently to cause the bicarbonate salt to leave solution.

### BRIEF DESCRIPTION OF THE DRAWINGS

Fig. 1 illustrates a medical solution container useful in the practice of the present invention.
Fig. 2 illustrates a plurality of the containers of Fig. 1 held in a carrier used for placing them within a chamber for treatment in accordance with the principles of the present invention.
Fig. 3 illustrates an exemplary treatment chamber in accordance with the principles of the present invention.
Fig. 4 illustrates a humidifying system useful with the treatment chamber of Fig. 3.
Figs. 5A - 5C illustrate placement of the container carriers into the treatment chamber through pneumostatic ports.
Fig. 6 is a schematic illustration of the pH adjustment protocols of the present invention.

### DETAILED DESCRIPTION OF THE INVENTION

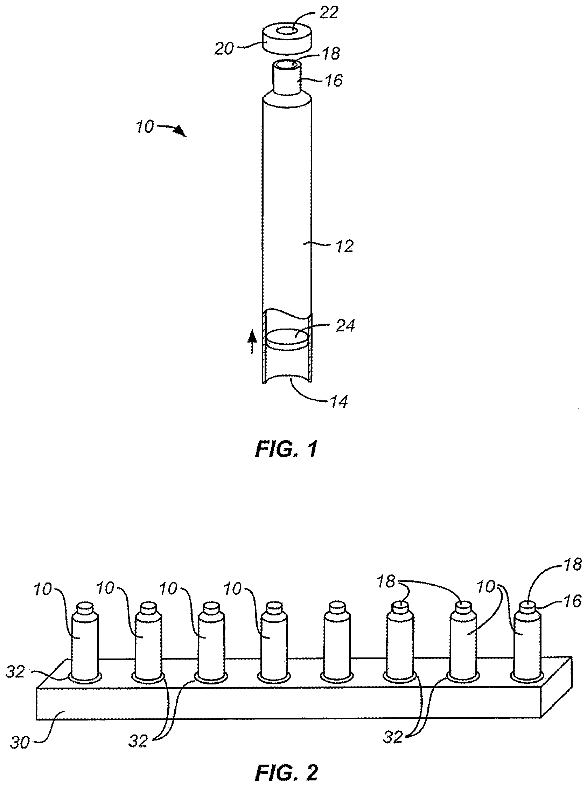

A buffer container 10 useful in the systems and methods of the present invention is illustrated in Fig. 1. The buffer container 10 comprises a cartridge 12 including a glass cylindrical body having an open bottom 14. A reduced diameter neck 16 is at the top with an opening 18 which can be covered and sealed with a cap 20 with a needle-penetrable septum 22. The bottom of the cartridge 12 is defined by a movable plunger 24 which can be pushed in an upward direction (indicated by the arrow) to apply pressure on the aqueous buffer held within the chamber 12 between the plunger and the opening 18 in neck 16. The construction of buffer container 10 as just described is conventional within the art.

Buffer containers 10 may be held in a carrier 30 which includes a plurality of receptacles 32, each of which receives an individual container 10 and holds that container in an upright orientation with the opening 18 in the neck 16 being upwardly exposed. The carriers may have a variety of configurations, but will usually be elongate structures which allow for convenient insertion and removal of the trays through pneumostatic ports in the equilibration chamber, as described in more detail below. For example, the carriers 30 may comprise a number of receptacles 32, typically from 1 to 32, which are arranged in a linear fashion with a minimum spacing between adjacent receptacles, typically from 3 mm to 3.5 mm. Typical buffer containers 10 will have a diameter in the range from 11 mm to 12 mm.

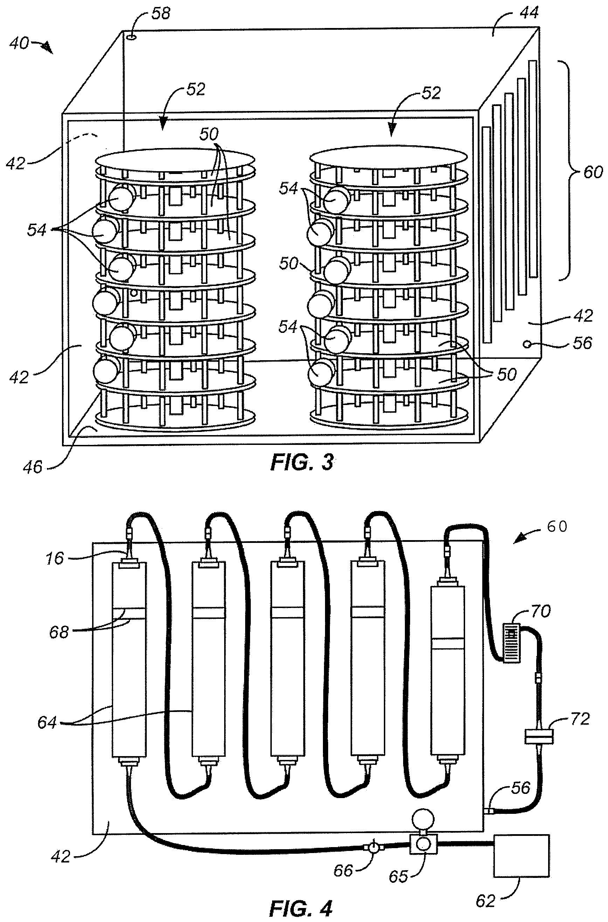

Referring now to Fig. 3, a treatment chamber 40 comprises an enclosure with perimeter walls 42, a top 44, and a bottom 46. The perimeter walls may include one or more large doors (not shown) to permit access to the interior of the chamber. The walls, top, and bottom will provide a contained interior in which the atmosphere can be controlled. The chamber need not be hermetically sealed, and small leakage from the container will be acceptable, provided that the flow rate of gas into the chamber is greater than the amount of leakage. The gas flow which is being introduced (as described below) will continuously replenish the atmosphere and maintain substantially constant conditions within the atmosphere to achieve the desired equilibration of the buffer containers 10, as described below. The exhaust port 58 is sized large enough that gas will escape freely, preventing any buildup of pressure within the chamber.

A plurality of horizontal supports 50 will be provided within the interior of the chamber 40, typically being part of rotatable carousels 52 which will be adapted to rotate at a rate in the range from 2 rpm to 5 rpm. A plurality of pneumostatic ports 54 will be provided in one or more of the perimeter walls 42 to provide access to each of the supports 50 for introducing and removing the buffer containers 10, typically by passing the carriers 30 through the ports. The ports will be designed to minimize the loss of gas from within the chamber during the pass-through process.

The carbon dioxide treatment gas will be introduced through an inlet port 56 near the bottom of the chamber and will be exhausted through an outlet port 58 at or near the top of the chamber. The gas humidifying and supply assembly 60 (Fig. 4) may be provided, typically being mounted on a side of the chamber as shown in Fig. 3. The gas humidifying and supply assembly includes a gas supply 62 which provides a carbon dioxide gas to a series of water columns 64. Typically, the gas will pass through a pressure regulator 65 which maintains sufficient pressure that the gas flows through the columns and the chamber to achieve the flow rate previously described. A valve 66 is provided to allow shut off, and water fill lines 68 on each of the columns 64 to allow filling to the proper level. Optionally, the last column may include a heating element, such as an electric incandescent light bulb, to assure that the gas entering the treatment chamber 40 is slightly above the control temperature for the chamber. By maintaining a slight temperature elevation, typically 1 - 2°C, the relative humidity of the gas will rise as its temperature lowers to the chamber temperature, thus assuring that the relative humidity remains above the target level. In another configuration, one of the first columns may include a heating element, such as an electric incandescent light bulb, to raise the temperature of this column slightly so that the typically colder gas entering the water column does not reduce the temperature of the other water columns below the temperature of the room. In this manner, the water in the last columns is very close to or equal the temperature of the room, as is the chamber, so that there is little or no change in relative humidity of the gas as it leaves the last water column and enters the chamber. Usually, a flow meter 70 will be provided in the line leading into the treatment chamber 40 and a gas filter 72 will be provided to remove any contaminants and help maintain a clean sterile environment within the chamber.

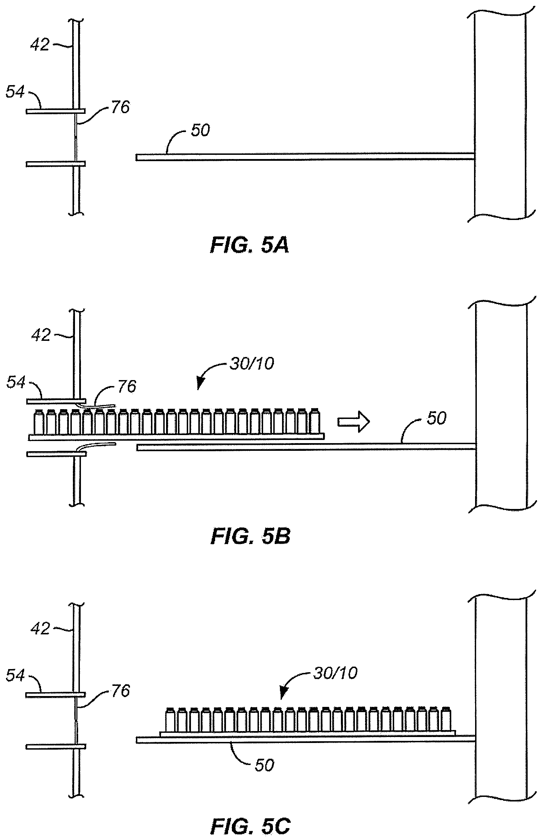

Referring now to Figs. 5A - 5C, passage of the carriers 30 with the containers 10 into the treatment chamber 40 through the hemostatic ports 54 will be described. Each of the hemostatic ports 54 present in the perimeter wall 42 has a gas barrier 76 in the form of a large flap valve, port hole door, curtain or the like. When nothing is passing through the port 54, the gas barrier 76 is closed, as shown in Fig. 5A, to inhibit the loss of gas from the interior of the treatment chamber. The gas barrier 76, however, can be opened by simply passing the carrier 34 therethrough, as shown in Fig. 5B. This allows the carrier to be introduced quickly and placed on the support 50 with only a minimum loss of gas from within the treatment chamber 40. After the carrier 30 is in place on the support 50, as shown in Fig. 5C, the gas barrier 76 will self-close to restore the barrier to gas loss. Even though some gas loss will occur, as the flow of gas is maintained above the volume of losses due to any leakage, the gas will be lost from the interior chamber to the exterior, thus having minimum or no effect on the composition, pressure, and temperature of the gas within the chamber.

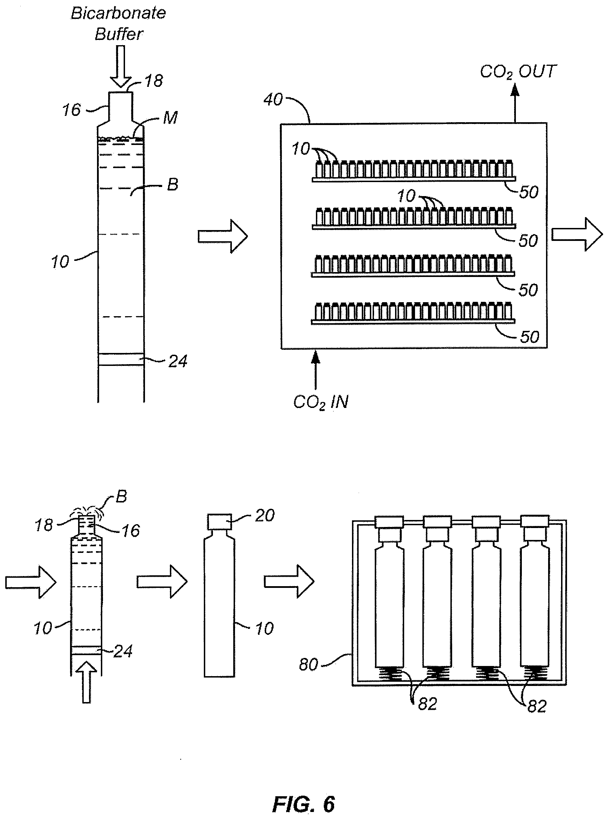

Referring to Fig. 6, the methods for treatment according to the present invention can now be described. Initially, the individual buffer containers 10 are filled with the aqueous bicarbonate buffer B to appoint near meniscus M. Usually, the volume of buffer B introduced will be selected so that the upper surface or meniscus M of the buffer lies below the reduced diameter neck 16 so that the meniscus M has a larger area than it would have if it were present within the neck. This larger area allows the carbonic acid within the buffer to reach equilibrium with the carbon dioxide in the atmosphere within the chamber 40 more rapidly than if the area were reduced. The containers 10 are then introduced to the treatment chamber 40, typically after placement on carriers 30 as described with reference to Figs. 5A - 5C above. After the containers 10 have been loaded onto the supports 50, they are left to equilibrate with the carbon dioxide environment which is continuously being replenished with the carbon dioxide gas for a number of hours under the conditions described above. After a sufficient time has passed for the buffer within the containers to equilibrate with the carbon dioxide within the treatment chamber 40, the containers are removed and the plungers 24 advanced to raise the level of buffer to the opening 18 in the neck 16. The caps 20 are then placed over the necks 16, leaving little or no head space, and the individual sealed containers 10 then placed in a storage tray 80 where springs 82 can be engaged against the plungers 24 to pressurize the buffers to inhibit the evolution of carbon dioxide gas from the buffer solution. By limiting such evolution, the pH of the buffer will be more stably maintained. The treatment trays 80 are also suitable for autoclaving the containers to assure sterility. The containers may then be stored and distributed within the trays 80 or may be stored and distributed in separate containers.

While the above is a complete description of the preferred embodiments of the invention, various alternatives, modifications, and equivalents may be used. Therefore, the above description should not be taken as limiting the scope of the invention which is defined by the appended claims.

## Claims

1. A method for adjusting pH in a plurality of buffer containers (10), said method comprising:
positioning each of the containers (10) in a chamber (40) with the container open to expose the buffer to an atmosphere in the chamber (40);
controlling the pressure, temperature, and CO₂ level of the atmosphere to values selected to provide a target equilibrium pH of the buffer;
holding the containers (10) in the controlled atmosphere of the chamber (40) for a time sufficient for the buffer in each of the containers (10) to reach the target pH; and
sealing each of the containers (10) to inhibit changes in pH over time.

2. A method as in claim 1, further comprising moving the containers (10) within the chamber (40) to promote mixing of the atmosphere and mixing of the buffer solution.

3. A method as in claim 1 or 2, wherein controlling the pressure, temperature, and CO₂ level of the atmosphere comprises introducing, circulating, and removing gas from the chamber (40), optionally wherein the gas is introduced and removed at a substantially constant flow rate, optionally wherein the flow rate is in the range from 0.1 V to IV per hour, where V is the open internal volume of the chamber (40).

4. A method as in any one of the preceding claims, wherein the open containers (10) are held in the chamber (40) for at least 24 hours, optionally from 24 hours to 96 hours.

5. A method as in claim 1, wherein the temperature is in the range from 70°C to 74°C, the pressure is with 1% of atmospheric, and the CO₂ content is at least 97% by volume, providing a pH in the range from 7.63 to 7.75, optionally wherein the gas has a 100% relative humidity when introduced to the chamber (40).

6. A method as in any one of the preceding claims, wherein at least some of the containers (10) include a volume of water which evaporates during the period of time when the container (10) is held in the chamber (40) to raise the relative humidity within the chamber (40).

7. A method as in claim 1, wherein the container (10) is sealed with no headspace remaining after sealing, optionally wherein the container (10) is entirely filled while in the chamber (40), and/or optionally wherein the container (10) is partially filled to increase the available open surface area while in the chamber (40) and completely filled prior to sealing.

8. A method as in any one of the preceding claims, wherein all containers (10) are identical in shape and volume.

9. A method as in any one of the preceding claims, wherein the containers (10) are sealed while within the chamber (40).

10. A method as in any one of claims 1-8, wherein the containers (10) are removed from the chamber (40) and then sealed.

11. Use of a system for adjusting the pH of a plurality of buffer containers (10) according to any one of the preceding claims, said system comprising:
a chamber (40) having a perimeter wall (42) and an interior for positioning each of the containers (10) in the chamber (40) with the container (10) open to expose the buffer to an atmosphere in the chamber (40);
a gas supply (62) connected to deliver a gas flow into the interior of the chamber (40) for controlling the pressure, temperature, and CO₂ level of the atmosphere to values selected to provide a target equilibrium pH of the buffer, wherein the gas flow comprises at least about 97% by volume carbon dioxide;
a plurality of spaced-apart supports (50) within the interior of the chamber (40) for holding the containers (10) in the controlled atmosphere of the chamber (40) for a time sufficient for the buffer in each of the containers (10) to reach the target pH;
and a multiplicity of pneumostatic passages (54) formed through the perimeter wall (42) and located to allow buffer containers (10) to be placed on and removed from each of the supports (50).

12. Use of a system as in claim 11, further comprising a mechanism imparts vibration to the containers, which causes the contents of the container (10) to mix during pH adjustment.

13. Use of a system as in claim 11 or 12, wherein the supports (50) are present on a rotatable carousel (52) present within the chamber (40), optionally wherein the carousel (52) comprises a plurality of stacked, circular shelves.

## Patentansprüche

1. Verfahren zum Anpassen eines pH-Werts in einer Mehrzahl an Puffercontainern (10), wobei das Verfahren umfasst:
Positionieren von jedem der Container (10) in einer Kammer (40), wobei die Container zum Aussetzen des Puffers einer Atmosphäre in der Kammer (40) offen sind;
Steuern des Drucks, der Temperatur und des CO₂-Niveau in der Atmosphäre auf Werte, die ausgewählt sind zum Erzielen eines Zielgleichgewichts des pH-Werts des Puffers;
Halten der Container (10) in der gesteuerten Atmosphäre der Kammer (40) für eine Zeit, die ausreichend ist für den Puffer in jedem der Container (10), den Ziel-pH-Wert zu erreichen; und
Dichten von jedem der Container (10) zum Verhindern, dass sich der pH-Wert über die Zeit ändert.

2. Verfahren nach Anspruch 1, ferner aufweisend Bewegen der Container (10) innerhalb der Kammer (40) zum Fördern von Mischen der Atmosphäre und Mischen der Pufferlösung.

3. Verfahren nach Anspruch 1 oder 2, wobei Steuern des Drucks, der Temperatur und des CO₂-Niveau der Atmosphäre aufweist: Einführen, Zirkulieren und Entfernen von Gas aus der Kammer (40), optional wobei das Gas eingeführt und entfernt wird bei einer im Wesentlichen konstanten Flussrate; wobei optional die Flussrate in einem Bereich von 0,1 V bis IV pro Stunde ist, wobei V das offene Intervallvolumen der Kammer (40) ist.

4. Verfahren nach einem der vorstehenden Ansprüche, wobei die offenen Container (10) in der Kammer (40) für wenigstens 24 Stunden, optional für 24 bis 96 Stunden gehalten werden.

5. Verfahren nach Anspruch 1, wobei die Temperatur in einem Bereich von 70 °C bis 74 °C, der Druck mit 1 % der Atmosphäre und das CO₂-Niveau konstant wenigstens 97 Volumen-% beträgt und der pH-Wert in einem Bereich von 7,63 bis 7,75 bereitgestellt wird, und optional wobei das Gas eine relative Feuchte von 100 % aufweist, wenn es in die Kammer (40) eingeführt wird.

6. Verfahren nach einem der vorstehenden Ansprüche, wobei wenigstens einige der Container (10) ein Wasservolumen umfassen, welches während der Zeitdauer verdampft, wenn der Container (10) in der Kammer (40) gehalten wird zum Erhöhen der relativen Feuchte in der Kammer (40).

7. Verfahren nach Anspruch 1, wobei der Container (10) ohne Kopfraum abgedichtet ist, der nach dem Dichten verbleibt, und optional wobei der Container (10) vollständig gefüllt ist, während er in der Kammer (40) ist, und/oder optional wobei der Container (10) teilweise gefüllt ist zum Erhöhen des verfügbaren offenen Oberflächenbereichs, während er in der Kammer (40) ist und vollständig vor dem Dichten gefüllt wird.

8. Verfahren nach einem der vorstehenden Ansprüche, wobei alle Container (10) eine identische Form und Volumen haben.

9. Verfahren nach einem der vorstehenden Ansprüche, wobei die Container (10) gedichtet werden, während sie in der Kammer (40) sind.

10. Verfahren nach einem der Ansprüche 1 - 8, wobei die Container (10) aus der Kammer (40) entfernt werden und dann gedichtet werden.

11. Verwendung eines Systems zum Anpassen des pH-Werts einer Mehrzahl an Puffercontainern (10) gemäß einem der vorstehenden Ansprüche, wobei das System aufweist:
eine Kammer (40) mit einer Umfangswand (42) und einem Inneren zum Positionieren von jedem der Container (10) in der Kammer (40), wobei die Container (10) offen sind zum Aussetzen des Puffers einer Atmosphäre in der Kammer (40);
eine Gaszuführung (62), die verbunden ist zum Zuführen eines Gasflusses in das Innere der Kammer (40) zum Steuern des Drucks, der Temperatur und des CO₂-Niveau der Atmosphäre auf Werte, die ausgewählt sind zum Erzielen eines Zielgleichgewichts des pH-Werts in dem Puffer, wobei der Gasfluss wenigstens 97 Volumen-% Kohlenstoffdioxid aufweist;
eine Mehrzahl an voneinander beabstandeten Stützen (50) innerhalb des Inneren der Kammer (40) zum Halten der Container (10) in der gesteuerten Atmosphäre der Kammer (40) für eine Zeit, die ausreichend ist zum Erreichen des Ziel-pH-Werts des Puffers in jedem der Container (10);
und eine Mehrzahl an pneumostatischen Durchlässen (54), die durch die Umfangswand (42) ausgebildet sind und angeordnet sind zum Erlauben der Puffercontainer (10), auf den Stützen (50) platziert zu werden und von diesen entfernt zu werden.

12. Verwendung eines Systems nach Anspruch 11, ferner aufweisend einen Mechanismus, der Vibration auf die Container aufbringt, welche den Inhalt der Container (10) dazu veranlasst, sich zu mischen, während der pH-Wert-Anpassung.

13. Verwendung eines Systems nach Anspruch 11 oder 12, wobei die Stützen (50) auf einem rotierbaren Karussell (52) angeordnet sind, welches innerhalb der Kammer (40) vorhanden ist, wobei optional das Karussell (52) eine Mehrzahl an gestapelten, kreisförmigen Fächern aufweist.

## Revendications

1. Procédé d'ajustement du pH dans une pluralité de réservoirs de tampon (10), ledit procédé comprenant :
le positionnement de chacun des réservoirs (10) dans une chambre (40) avec le réservoirs ouvert pour exposer le tampon à une atmosphère dans la chambre (40) ;
la régulation des pression, température, et taux de CO₂ de l'atmosphère à des valeurs choisies pour fournir un pH d'équilibre cible du tampon ;
le maintien des réservoirs (10) dans l'atmosphère régulée de la chambre (40) pendant un temps suffisant pour que le tampon dans chacun des réservoirs (10) atteigne le pH cible ; et
le scellage de chacun des réservoirs (10) pour inhiber des changements de pH au cours du temps.

2. Procédé selon la revendication 1, comprenant en outre le déplacement des réservoirs (10) au sein de la chambre (40) pour favoriser le mélange de l'atmosphère et le mélange de la solution tampon.

3. Procédé selon la revendication 1 ou 2, dans lequel la régulation des pression, température, et taux de CO₂ de l'atmosphère comprend l'introduction, la mise en circulation, et l'élimination de gaz de la chambre (40), facultativement dans lequel le gaz est introduit et éliminé à un débit sensiblement constant, facultativement dans lequel le débit est dans la plage de 0,1 V à 1 V par heure, où V est le volume interne ouvert de la chambre (40).

4. Procédé selon l'une quelconque des revendications précédentes, dans lequel les réservoirs ouverts (10) sont maintenus dans la chambre (40) pendant au moins 24 heures, facultativement de 24 heures à 96 heures.

5. Procédé selon la revendication 1, dans lequel la température est dans la plage de 70 °C à 74 °C, la pression est à 1 % de l'atmosphérique, et la teneur en CO₂ est d'au moins 97 % en volume, fournissant un pH dans la plage de 7,63 à 7,75, facultativement le gaz a une humidité relative de 100 % lorsqu'il est introduit dans la chambre (40).

6. Procédé selon l'une quelconque des revendications précédentes, dans lequel au moins certains des réservoirs (10) incluent un volume d'eau qui s'évapore pendant le laps de temps dans lequel le réservoir (10) est maintenu dans la chambre (40) pour élever l'humidité relative au sein de la chambre (40).

7. Procédé selon la revendication 1, dans lequel le réservoir (10) est scellé sans espace restant après scellage, facultativement dans lequel le réservoir (10) est entièrement rempli pendant qu'il est dans la chambre (40), et/ou facultativement dans lequel le réservoir (10) est partiellement rempli pour augmenter la superficie ouverte disponible pendant qu'il est dans la chambre (40) et complètement rempli avant scellage.

8. Procédé selon l'une quelconque des revendications précédentes, dans lequel tous les réservoirs (10) sont de forme et volume identiques.

9. Procédé selon l'une quelconque des revendications précédentes, dans lequel les réservoirs (10) sont scellés tout en étant au sein de la chambre (40).

10. Procédé selon l'une quelconque des revendications 1 à 8, dans lequel les réservoirs (10) sont retirés de la chambre (40) puis scellés.

11. Utilisation d'un système pour ajuster le pH d'une pluralité de réservoirs de tampon (10) selon l'une quelconque des revendications précédentes, ledit système comprenant :
une chambre (40) ayant une paroi périmétrique (42) et un intérieur pour positionner chacun des réservoirs (10) dans la chambre (40) avec le réservoir (10) ouvert pour exposer le tampon à une atmosphère dans la chambre (40) ;
une alimentation de gaz (62) raccordée pour délivrer un flux de gaz dans l'intérieur de la chambre (40) en vue de réguler les pression, température, et taux de CO₂ de l'atmosphère à des valeurs choisies pour fournir un pH d'équilibre cible du tampon, dans lequel le flux de gaz comprend au moins environ 97 % en volume de dioxyde de carbone ;
une pluralité de supports espacés (50) au sein de l'intérieur de la chambre (40) pour maintenir les réservoirs (10) dans l'atmosphère régulée de la chambre (40) pendant un temps suffisant pour que le tampon dans chacun des réservoirs (10) atteigne le pH cible ;
et une multiplicité de passages pneumostatiques (54) formés à travers la paroi périmétrique (42) et situés pour permettre à des réservoirs de tampon (10) d'être placés sur et retirés de chacun des supports (50).

12. Utilisation d'un système selon la revendication 11, comprenant en outre un mécanisme transmettant des vibrations aux réservoirs, qui amène le contenu du réservoir (10) à se mélanger pendant un ajustement de pH.

13. Utilisation d'un système selon la revendication 11 ou 12, dans laquelle les supports (50) sont présents sur un carrousel pouvant être mis en rotation (52) présent au sein de la chambre (40), facultativement dans lequel le carrousel (52) comprend une pluralité d'étagères circulaires empilées.
